Europäisches Patentamt

European Patent Office

Office européen des brevets

(11) Publication number: **0 488 038 A2**

# EUROPEAN PATENT APPLICATION

(21) Application number: **91119796.0**

(22) Date of filing: **21.11.91**

(51) Int. Cl.5: **B32B 27/08**, B32B 5/18

(30) Priority: **29.11.90 US 619584**

(43) Date of publication of application:
**03.06.92 Bulletin 92/23**

(84) Designated Contracting States:
**BE DE ES FR GB IT NL**

(71) Applicant: **THE DOW CHEMICAL COMPANY**
**2030 Dow Center Abbott Road**
**Midland, MI 48640(US)**

(72) Inventor: **Kelch, Robert H.**
**127 Bridle Path Lane**
**Granville, Ohio 43023(US)**
Inventor: **Zabrocki, Vincent S.**
**1300 Howell Drive**
**Newark, Ohio 43055(US)**

(74) Representative: **Sternagel, Hans-Günther, Dr.**
**et al**
**Patentanwälte Dr. Michael Hann, Dr. H.-G.**
**Sternagel, Dr. H. Dörries, Sander Aue 30**
**W-5060 Bergisch Gladbach 2(DE)**

(54) Composite film structures and articles made therefrom.

(57) A composite film structure useful for the manufacture by a reaction-in-place foaming process of foamed polyurethane articles such as automobile headrests and seats.

EP 0 488 038 A2

The present invention relates to adhesive films, to methods for making such films, and to articles and manufacturing processes employing such films.

Most of the adhesive films which are currently in use are solid adhesive films, although some monolayer adhesive films are known which have a net-like structure, such as have been sold as Sharnet™ and Delnet™ films by Sharnet Corporation and Applied Extrusion Technologies, respectively.

Solid adhesive films are used in a variety of applications and can be made by conventional methods and on conventional equipment. Solid adhesive films made from such materials as the ethylene copolymer adhesives, however, tend to block or tack together on both process and film rolls. Slip and antiblock additives have conventionally been added to combat these tendencies, but these additives may adversely affect the adhesion of the films to desirable substrates. In addition, the flexibility, stretchability and permeability characteristics of a conventional solid adhesive film structure are frequently limited by the selection of materials having certain necessary adhesive qualities.

Monolayer net adhesive films of the Sharnet™ and Delnet™ adhesive film varieties also possess certain practical shortcomings, in that these films are manufactured only by complex oriented blown film processes or modified cast embossed processes and cannot act as a barrier to liquids, for example, where a barrier to liquids but not to water vapor or other gases is desirable.

There are, however, a number of applications or opportunities for adhesive films where in both a barrier to liquids and a degree of gas permeability, flexibility and excellent adhesion are required. An example of such a use is in the manufacture of foamed articles such as automobile seats and headrests by a reaction-in-place polyurethane foam process.

In one such process, a thin foam- and adhesive film-backed fabric structure is placed in a mold cavity and conformed to the walls of the cavity by a vacuum-forming procedure. A liquid polyurethane foam-forming composition is injected into the cavity, and the polyurethane foam-forming composition is foamed and solidified, with the resulting foam core being joined to the protective fabric covering via a conventional solid adhesive film.

The adhesive film is asked to act as a barrier to the liquid polyurethane foam-forming composition during processing, and to provide moisture breathability to the seat or headrest in actual use while not significantly adversely affecting fabric properties such as its drape, hand, color or nap. The film desirably should also adhere well to both the fabric and the foam core even after high heat exposure, humidity aging, and hot and cold cycling, and should possess a chemical resistance to typical seat cleaning solvents as well as human perspiration.

None of the conventional adhesive film structures, however, fully meet the needs of this and other such demanding applications wherein the barrier to liquids and the conventional and comparatively inexpensive manufacture of a solid adhesive film are desired, as well as for example a degree of flexibility and permeability to gases.

Further, because of the expense involved in applying and using an acrylic or urethane back-coating on the fabric covering as is conventionally done in the exemplified seat manufacturing process, and in applying and using a thin foam backing, it would be advantageous if the fabric covering could be directly joined to the foam core via some sort of adhesive film structure.

The present invention meets the illustrated need and other needs not met by the existing adhesive films, by providing in one aspect a composite film structure which comprises an open cell foamed adhesive portion and a substantially solid thermoplastic film portion in face-to-face relationship.

The substantially solid thermoplastic film portion, which may consist of one or a plurality of substantially solid thermoplastic film layers, provides a barrier to liquid where desired, and can be selected and designed to posses certain vapor/gas transmission properties.

The foamed adhesive portion provides the requisite adhesion to a particular substrate without at the same time interfering unduly with vapor/gas transmission through the substrate and the thermoplastic film portion.

At the same time, the structure can be possessed of a greater degree of composite toughness and strength by virtue of the thermoplastic film portion, compared to a solid adhesive monolayer film or a monolayer film of the Sharnet™ or Delnet™ adhesive film varieties.

The manufacture of the composite film structure described, by coextruding an adhesive material having a blowing agent incorporated therein with the material comprising the thermoplastic film portion under conditions sufficient for causing the adhesive material to foam, thus can be seen to provide a method for increasing the permeability of an adhesive film with respect to a gas without increasing the permeability of the film with respect to a liquid.

In a somewhat different aspect, a method is provided for reducing process and film roll tack in the coextrusion of a film comprised of a layer of a tacky material generally and a layer of a non-tacky material in face-to-face relationship, and comprises the step of incorporating a blowing agent into the tacky material before coextrusion of the film.

It has been discovered that, ostensibly because of the roughened surface area and reduced area of contact between the resulting foamed layer and an adjacent solid film layer of a second ply of the film, the foaming of the layer of the tacky material in this process generally significantly reduces the tendency of these films to tack or block to one another on film rolls compared to films prepared with non-foamed layers of the tacky material.

In a like manner, the foaming of the layer of the tacky material also generally has the effect of reducing film blocking, tack and drag between the foamed layer and film process equipment such as casting rolls, idler rolls or blown film collapsing racks during film fabrication and subsequent downstream processing.

As a result, the composite film structures of the present invention may generally be made by both conventional blown and cast film processes without additional measures being taken such as the addition of large amounts of slip additives.

In still another, more particular aspect, the invention provides a method for fabricating a foamed article such as an automobile headrest or seat by a reaction-in-place foaming process. This method comprises the steps of:

placing in a mold cavity an outermost facing layer such as a woven or nonwoven fabric, an open cell foamed adhesive layer which may or may not have been bonded previously to the outermost facing layer, and a thermoplastic elastomer layer bonded to the adhesive layer opposite the facing layer and presenting an inwardly-facing surface for bonding to a foam core of the article formed during the reaction-in-place forming process;

introducing a foam-forming composition into the cavity; and

subjecting the cavity and included materials to conditions which will form the core and bond the inwardly-facing surface of the elastomer layer to the foam core, and the open cell foamed adhesive layer to the outermost facing layer if not already previously bonded thereto.

By this method, the present invention omits the acrylic or urethane backing and the urethane foam backing of previous structures, and joins a foamed-in-place core to a fabric through an intervening composite film structure which acts to contain the polyurethane foam-forming composition during the formation of the core, but which nevertheless permits water vapor to be transmitted across the structure.

A greater understanding of the present invention may be obtained by referring to the detailed description which follows below of the preferred embodiments, and with reference to the accompanying drawings.

Fig. 1 is a fragmentary cross-sectional view of a composite film structure of the present invention, showing an optional layer.

Figure 2 is a fragmentary cross-sectional view of a preferred embodiment of the composite film structure of the present invention, omitting the optional layer.

Figure 3 is a fragmentary cross-sectional view of a laminate of a fabric and the preferred composite film structure of Figure 2.

Figure 4 is a perspective view of an article made from the laminate of Figure 3, with a portion of such article cut-away for viewing in cross-section.

Figure 5 is a fragmentary cross-sectional view of the cut-away portion of the article in Figure 4.

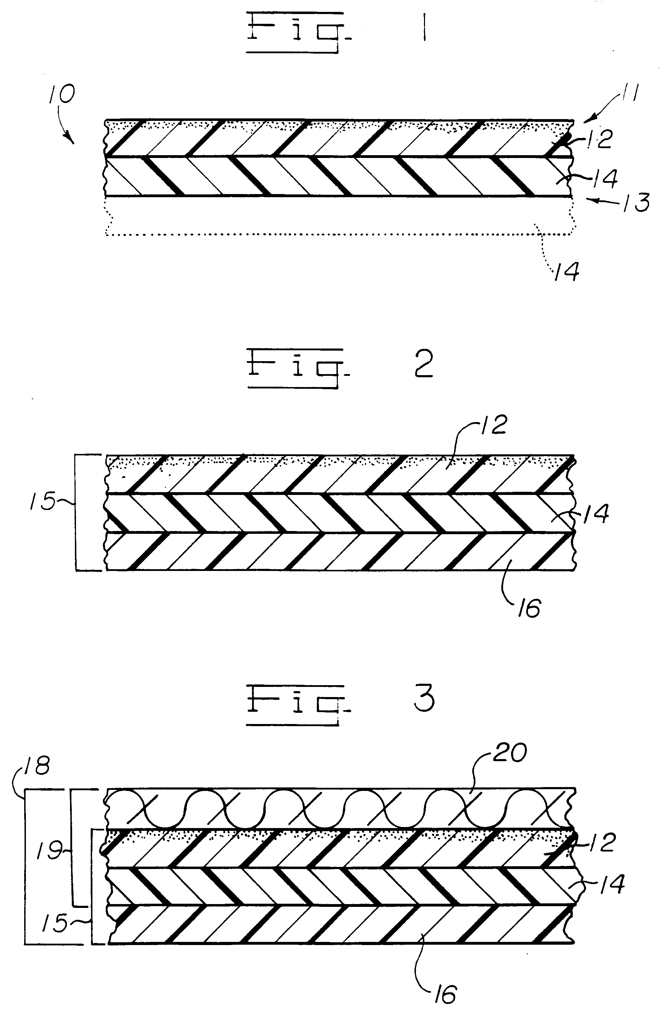

Referring now to the drawings, and more particularly to Figure 1, a composite film structure of the present invention is shown and generally designated by the numeral 10.

In this embodiment, the open cell foamed adhesive portion 11 consists essentially of an open cell foamed adhesive layer 12, and the substantially solid thermoplastic film portion 13 consists essentially of one or more substantially solid thermoplastic film layers 14.

The open cell foamed adhesive layer 12 can be formed from any adhesive resin, and the composition of the adhesive layer 12 can be selected, for example, to melt at certain temperatures and conditions and to provide thermal stability to the structure 0 or to a laminate of which the structure 10 is a part, to posses a degree of chemical resistance, certain adhesive properties, or to provide other properties of interest.

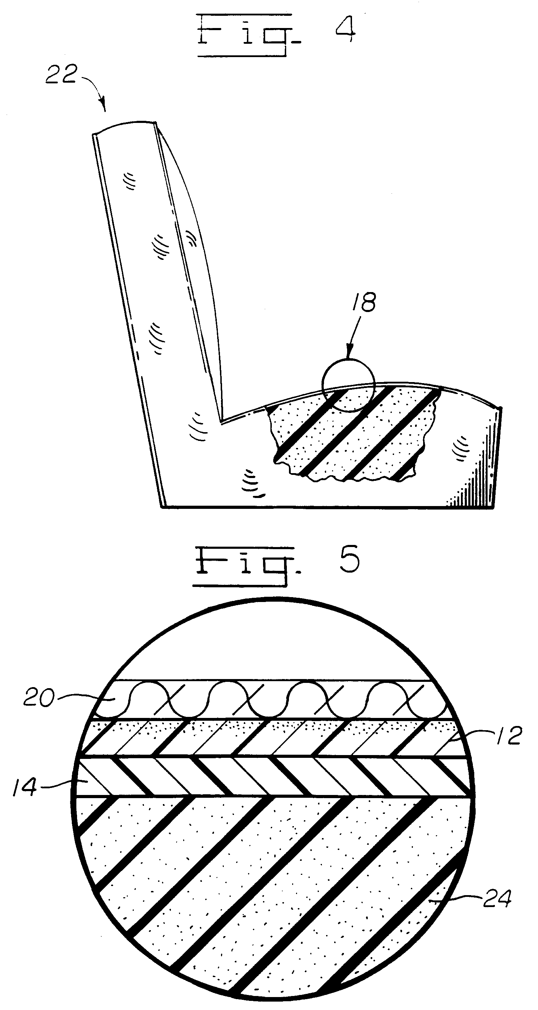

For the primary use to which the present application is addressed, however, namely the manufacture of an automobile seat, headrest, or other foam-in-place part (Figures 4 and 5), the foamed adhesive layer 12 is preferably comprised of an adhesive material selected from the group consisting of the ethylene copolymer and terpolymer adhesives, copolyester-ether elastomers, thermoplastic polyurethanes, polyesters, polyamides, olefinic adhesive polymers, styrenic block polymers and mixtures of one or more of these materials.

Exemplary of the preferred adhesive materials are the styrene-butadiene-styrene and styrene-isoprene-styrene triblock and styrene-butadiene diblock polymers (styrenic block polymers), polyvinyl alcohols (olefinic adhesive polymers), ethylene-vinyl acetate and ethylene-acrylic acid copolymers (ethylene copolymer adhesives), and the maleic anhydride-modified ethylene-vinyl acetate adhesive materials (ethylene terpolymer adhesives). Most preferred are the maleic anhydride-modified ethylene-vinyl acetate terpolymer adhesive resins, such as the presently commercially available Plexar™ 3342 (2.0 melt index, Quantum Chemical) and Bynel™ CXA 3101 (3.5 melt index, E.I. DuPont De Nemours & Co., Inc.) adhesive resins.

The layer 12 generally comprises no more than about 50 percent of the thickness of the film structure 10, although preferably the layer 12 comprises from 10 to not more than 30 percent of the thickness of the the film structure 10, and most preferably is from 20 to 30 percent of the thickness of structure 10.

The thermoplastic film layer or layers 14 can be comprised of any given thermoplastic film-forming material which is permeable with respect to a selected gas or gases, while the layer or layers 14 are at the same time impermeable with respect to a liquid. The compositions of the one or more layers can also be selected based on a number of properties such as melting point characteristics, adhesion to other materials or substrates, and vapor/gas transmission properties.

Again, however, for the primary anticipated use of the composite film structure 10 in the manufacture of automobile seats and headrests, the layers 14 are each comprised in a preferred embodiment of an elastomeric material selected from the group consisting of thermoplastic polyurethanes, copolyester-ether elastomers, copolyamide-ether elastomers, styrenic diblock and triblock elastomers, and mixtures of one or more of these materials whereby a stretchiness and conformability are imparted to the structure 10.

Exemplary of the preferred elastomeric materials are the Hytrel™ copolyester-ether elastomers currently sold by E.I. DuPont de Nemours & Co., Inc., the Pebax™ copolyamide-ether elastomers sold by Atochem, Inc., the Stereon™ and Kraton™ styrenic triblock and diblock elastomers sold by Firestone Rubber and Latex Co. and Shell Chemical, respectively, and the Pellethane™ thermoplastic polyurethane resins currently sold by The Dow Chemical Company.

For a preferred embodiment of the composite film structure 10 shown in Figure 1 which employs a single thermoplastic elastomer laye 14, the layer 14 in addition to the aforementioned materials should preferably further comprise an adhesive materials fraction. The adhesive materials fraction in a given layer 14 can be comprised of some or all of the materials found in the foamed adhesive layer 12, with a view towards recycling scrap from production of the film 10. The adhesive materials fraction can generally comprise from 0 to 50 percent by weight of a thermoplastic elastomer layer 14, but will preferably comprise from 10 to 30 percent by weight of the layer 14.

The incorporation in a single layer 14 of an adhesive materials fraction is generally desirable for improving the extrusion stability and melt strength of a layer 14 in the coextrusion of a composite film structure 10, and for increasing the adhesion between the foamed adhesive layer 12 and the thermoplastic elastomer layer 14 in the manufacture of a foamed article such as an automobile seat or headrest. On the other hand, the addition of the adhesive materials fraction can normally be expected to adversely affect the stiffness and conformability of a laminate of a fabric and the composite film structure 10, as well as the ability of the structure 10 and the laminate formed therefrom to transmit water vapor and moisture.

The desirability of employing an adhesive materials fraction in a layer 14 and the composition and size of the fraction will in the example of the making of a seat or headrest involve a balancing of the benefits to be gained in terms of improved interlayer adhesion, melt strength and extrusion stability, and the detrimental effects in terms of water vapor transmissibility and stiffness of a structure 10.

Where more than one elastomer layer 14 is employed (as suggested by Figure 1), at least the layer 14 nearest the adhesive layer 12 and preferably also the layer 14 farthest from the layer 12 further comprise an adhesive materials fraction, subject to the balancing of the benefits and detrimental effects of such adhesive materials fractions as described in the preceding paragraph.

The layer 14 nearest the layer 12 can preferably be formed at least in part from scrap from the coextrusion of the three-layer structure 10 and thus will comprise at least the materials in the layer 12 and in the layer 14 which is farthest from the layer 12.

It will be appreciated that the adhesive materials fraction of the layer 14 farthest from the layer 12 will generally contain additional or different adhesive materials than used in the foamed adhesive layer 12, because of the different natures of the fabric to which the adhesive layer 12 adheres and the foamed core to which the farthest layer 14 adheres in a seat made by a foam-in-place process.

The amounts and types of adhesives used in the various layers 14 will generally be directed to giving improved adhesion to the layers or substrates immediately adjacent such layers 14, as further impacted by the considerations enumerated above with respect to a structure 10 having a single thermoplastic elastomer layer 14.

In a most preferred version 15 shown in Figure 2, the composite film structure of the present invention in addition to a foamed adhesive layer 12 and a single elastomer layer 14 further comprises a peelable release or support layer 16. The layer 16 can be in face-to-face relationship with the layer 12 opposite the layer 14, or in face-to-face relationship with the layer 14 opposite the layer 12.

The layer 16 can comprise anywhere from 0 to 80 percent of the thickness of the structure 15, with the layers 12 and 14 collectively comprising the remainder. Preferably, the release layer 16 will comprise from 30 to 40 percent of the thickness of a preferred composite film structure.

The peelable release layer 16 is primarily intended to serve as a support for the layers 12 and 14, and should be readily released therfrom when it is desired to place a laminate 18 (Figure 3) of the structure 15 of Figure 2 and a protective fabric layer 20 in a mold cavity for fabricating a foamed article such as an automobile headrest or a seat 22 (Figures 4 and 5). Accordingly, the release layer 16 is preferably comprised of a polyolefin such as a polyethylene or polypropylene which is relatively easy to process in a film extrusion process, relatively inexpensive, and which does not adhere well to the materials in an adjacent layer 14 or to the adhesive layer 12, depending on the layer 16's placement in the structure 15.

Laminate 18 (Figure 3) can be produced by flame bonding a fabric layer 20 (which can have an acrylic or urethane back-coating or which can lack such a coating) to a composite film structure 15, or preferably simply by hot roll lamination of the fabric 20 to a structure 15.

Preferably the composite film structure 15 is produced by coextrusion of the adhesive layer 12, the elastomer layer 14, and the release layer 16 in a conventional blown or cast film process, with a physical or chemical blowing agent having been incorporated into the material for the adhesive layer before coextrusion with the elastomer layer 14 and release layer 16.

Most preferably, the structure 15 is produced by a blown film process, with a chemical blowing agent having been incorporated into the material for the adhesive layer 12 in the form of a convenient concentrate. Concentrates with azodicarbonamide, blends of sodium bicarbonate and citric acid, and other blowing agents have been made commercially available and are considered suitable, but other blowing agents should be useful for making an adhesive layer 12 with the desired open cell character. Other conventional materials, for example, in the nature of processing aids, antioxidants, thermal stabilizers or pigments can be added to one or more of the layers 12, 14 and 16 if desired.

The foamed adhesive layer 12 can generally be either the inner or outer layer in the blown film process, one effect of foaming being generally to reduce the tack of an adhesive layer 12 compared to a solid film layer.

It can be seen that the incorporation of a blowing agent in the materials for forming an open cell foamed adhesive layer 12 thus offers a broadly applicable method also for reducing process equipment contact and film roll unwind tack in the coextrusion of the tacky adhesive layer 12 and a non-tacky thermoplastic elastomer layer 14.

Unlike more conventional methods of reducing process and film roll unwind tack such as the addition of slip or antiblock additives, the method offered by the present invention does not adversely affect the adhesive characteristics of a composite film structure to such substrates as a woven polyester fabric, and may in fact enhance the adhesion of the structures to such substrates by the foamed adhesive layer 12 being better able to melt into the fabric, for example, than a solid adhesive film.

The open cell foamed character of the adhesive layer 12 permits the passage of vaporous or gaseous materials therethrough where vapor or gas transmission across the structure 15 is of interest, in addition to providing a degree of flexibility and stretchability not possible with a solid adhesive layer construction. The gas or vapor permeability of an adhesive layer 12 will be dependent generally on the average cell size of the cells in the layer 12 and the openness of the cells, and with the proper selection of an adhesive a degree of gas permeability can be achieved while still achieving a desired degree of adhesion of the layer 12 to a given film, fabric, or other surface. At the same time, the elastomeric layer or layers 14 can provide a barrier to passage of liquids through the structure 15, composite film toughness, strength, flexibility, stretchability, and adhesive characteristics which may differ from those of the adhesive layer 12 and which therefore may allow the joining of diverse substrates.

The laminate 18 of Figure 3 is particularly suitably used, as suggested previously, in a process for the manufacture of automobile seats 22 such as shown in Figures 4 and 5 by a reaction-in-place foaming process. Typically the release layer 16 is peeled away from the layer 14 and a unitary structure 19 comprised of the fabric layer 20, the open cell foamed adhesive layer 12, and the elastomer layer 14 is placed in a mold for the seat 22. The fabric layer 20 faces outwardly, with the elastomer layer presenting an inwardly-facing surface for bonding to a foamed core 24 using the heat generated by the foaming of the polyurethane foam-forming composition. The structure 19 is made to conform to the inside walls of the mold by a vacuum-forming procedure, and the structure 19 and foam-forming composition are thereafter subjected to conditions sufficient to carry out the foaming process and to bond the structure 19 to the resulting foamed core 24.

Rather than have the fabric layer 20 previously adhered to the adhesive layer 12 and elastomer layer 14 in a unitary structure 19 by flame bonding or hot roll lamination, it is also believed possible in certain narrow circumstances to separately place the fabric layer 20 and the adhesive layer 12 plus elastomer layer 14 in a mold cavity and employ the heat generated by the foaming reaction to fuse together not only the resulting foam core 24 and the thermoplastic elastomer layer 14, but also the foamed adhesive layer 12 and the fabric layer 20. The use of a unitary structure 19 as depicted in Figure 3 is generally preferred, however.

The standards of automobile manufacturers for film/fabric laminates used as part of a foam-in-place process are not yet established. Established standards by which the composite structures 15 and laminates 18 could be designed, namely those established for foam/fabric laminates in a traditional "cut and sew" process of forming completed seats wherein a foam/fabric or film/foam/fabric laminate is cut and sewn and fitted over a preformed, precut polyurethane foam slab, vary from manufacturer to manufacturer, from model to model, and even from seat style to seat style.

Further, the properties of interest can vary based on a number of variables including lamination conditions, fabric type, and whether the fabric is back-coated as with an acrylic or urethane back-coating, so that a complete description of a laminate 18 and structure 19 which will be universally suitable for the manufacture of seats and headrests is not possible.

As a rule, though, a laminate 18 including a thermoplastic elastomer layer 14 of about 2 mils ($5 \times 10^{-5}$ m) in thickness, a foamed adhesive layer 12 of from 0.5 mils ($1.2 \times 10^{-5}$ m) to 1.0 mils ($7.5 \times 10^{-5}$ m) in thickness in the unfoamed state and with an average net cell area of from about 0.10 mm$^2$ to 17 mm$^2$, and an unbacked woven polyester, nylon or other synthetic fabric 20 should generally meet the current body cloth requirements of most major automobile manufactures. Preferably the average net cell area of the open cell foamed adhesive layer 12 will be from 0.3 mm$^2$ to 8 mm$^2$, and most preferably from 0.3 mm$^2$ to 6 mm$^2$.

It should be observed that even at a given average cell area in the foamed adhesive layer 12, the water vapor transmission rate (WVTR) coefficient of friction and blocking tendencies of a composite film structure can vary depending on the openness of the foamed adhesive layer and on the melt strength of the adhesive, extrusion temperature, type and amount of blowing agent employed, whether the composite film structure is made by a cast or blown film process, line speed, etc. In general terms, larger average net cell areas will correspond to higher water vapor transmission rates, and the rougher foamed layers will be associated with lower coefficients of friction and reduced blocking.

The average net cell area of a foamed adhesive layer 12 is determined by randomly measuring 10 cells in the machine and transverse directions of the film structure with an optical magnifier having appropriate scale gradations for determining size, and averaging the measurements in the machine and transverse directions for the 10 cells. Since the cells are generally elliptical or circular in shape, the average net cell area for the foamed adhesive layer 12 in a given composite film structure is estimated by the equation $A = (\pi/4)$ (MD) (TD), where A is the average net cell area, MD is the average cell dimension of the 10 cells in the machine direction, and TD is the average cell dimension in the transverse direction.

Different uses of the composite film structure 15 and laminate 18 may demand different combinations of stretchability, adhesion, and vapor/gas transmission among other properties, but the design of film structure 15 and laminates 18 having these combinations of properties is well within the design skills of one in the art given the instant disclosure and the Examples which follows.

The following examples are intended to be merely illustrative of the present invention, and should not be construed as implying any limitations with respect to the scope of the present invention, as defined by the claims following thereafter.

Example 1

A three-layer composite film structure was produced by a cast film coextrusion of an outer, peelable release layer comprised of low density polyethylene (LDPE), a core layer of a thermoplastic polyester-ether copolymer (TPE) elastomer (Hytrel™ 3548 (E.I. DuPont De Nemours & Co., Inc.), 35 D durometer), and an open cell foamed adhesive layer formed from an ethylene-vinyl acetate copolymer (Elvax™ 3190 (DuPont), 25 percent vinyl acetate, 2.0 melt index) and 4 phr by weight of an azodicarbonamide-based chemical blowing agent concentrate (Quantum Spectratech FM-1054 S (Quantum Chemical), 20 percent azodicarbonamide in ethylene-vinyl acetate, 340°F to 360°F (171°C to 182°C) activation temperature). The average net cell dimensions of the foamed adhesive layer were 4.5 mm in the machine direction and 0.8 mm in the transverse direction, so that the average net cell area of the foamed adhesive layer was approximately 2.8 mm$^2$.

The composite film structure was then laminated to a polyester fabric using a hot roll laminator, with the foamed adhesive layer against the fabric. The foamed adhesive layer was observed to melt and fuse into the fabric, resulting in a bond between the fabric and adhesive layer which could not be overcome except by destruction of the foamed adhesive layer.

The peelable LDPE release layer peeled easily away from the elastomer layer, and the elastomer layer was substantially solid, in the sense of being sufficiently free of pinholes from the lamination procedure to prevent the leakage of unacceptably high amounts of a polyurethane foam-forming composition through to the fabric during a reaction-in-place forming process.

The fabric/film laminate exhibited good flexibility, hand and stretchability.

Example 2

This example provides a comparison of the effect of a solid versus an open cell foamed construction of the adhesive layer on the tack, adhesion and blocking characteristics of a two-layer film consisting of the adhesive layer and a layer of an elastomer.

Films were coextruded in a blown film process in three pairs or "systems", with one film in each system having a convention solid adhesive layer in combination with a solid layer of an elastomer, and the second film having an open cell foamed layer of the same adhesive in combination with a solid layer of the same elastomer. The films were coextruded within each pair under identical conditions, except for the incorporation in the films with the open cell foamed adhesive layers of a chemical blowing agent in the form of an azodicarbonamide-based concentrate or a sodium bicarbonate-citric acid based concentrate.

Each pair of films was tested to compare the room temperature coefficients of friction of the films against a metal surface, film to film blocking, and the peel strength of a bond to an unbacked, woven polyester fabric when hot roll laminated to the fabric.

The first system tested, System I, employed a blend in the thermoplastic layer which was 75 percent by weight of an aliphatic polyurethane and 25 percent by weight of Plexar™ 3342 maleic anhydride-modified ethylene-vinyl acetate adhesive (2.0 melt index, Quantum Chemical), and in the adhesive layer employed Bynel™ CXA 3101 maleic anhydride-modified ethylene-vinyl acetate adhesive (melt index 3.5, E.I. DuPont de Nemours & Co., Inc.). The blowing agent was Quantum Spectratech™ FM 1764 sodium bicarbonate/citric acid-based adhesive concentrate (about 5 percent by weight each of sodium bicarbonate and citric acid in low density polyethylene (LDPE), with an activation temperature of 360°F to 410°F (182°C to 210°C)) and the blowing agent was employed at a 5 phr (by weight) level. The average net cell dimensions were 0.9 mm in the machine direction and 0.4 mm in the transverse direction, giving an average net cell area of about 0.28 mm$^2$.

System II used Hytrel™ 4056 copolyester-ether elastomer (40D durometer, Dupont) for its thermoplastic layer, and Elvax™ 3190 ethylene-vinyl acetate adhesive (25 percent vinyl acetate, melt index 2.0 (DuPont)) in the adhesive layer. The blowing agent was Quantum Spectratech™ FM 1054 azodicarbonamide-based concentrate ((Quantum Chemical), 20 percent azodicarbonamide in ethylene-vinyl acetate, 340°F to 360°F activation temperature), and this blowing agent was employed in concentrate form at 3 phr in the adhesive layer. The resulting average foamed net cell dimensions are believed to have been approximately 5.0 mm in the machine direction and 0.8 mm in the transverse direction, corresponding to an average net cell area of about 3.1 mm$^2$.

System III used Pellethane™ 2103-90AEF aromatic ether polyurethane (90A durometer, The Dow Chemical Company) for the thermoplastic layer, and for the adhesive layer used the Plexar™ 3342 maleic anhydride-modified ethylene-vinyl acetate adhesive previously employed in System I. The blowing agent was Quantum Spectratech™ FM 1570 sodium bicarbonate/citric acid-based concentrate (about 25 percent by weight each of sodium bicarbonate and citric acid in low density polyethylene, activation temperature of 360°F to 410°F (182°C to 210°C), and was employed in the foamed adhesive layer at a 2 phr level. Average foamed net cell dimensions in the foamed adhesive layer are believed to have been about 5.0 mm in the machine direction and 1.4 mm in the transverse direction, giving an average foamed net cell area of about 5.5 mm$^2$.

The results obtained from the tests on these systems are reported in Table 1 as follows:

Table 1

| System | Adhesive Layer | Adhesion to Fabric (lbs/inch)/(N/m) | Blocking (grams) | Room Temp. Coefficient of Friction |
|---|---|---|---|---|
| I | Solid | DNP(a) | 41 | 0.56 |
|  | Foamed | DNP | 18 | 0.43 |
| II | Solid | 0.8 (1.4 x $10^2$) | 52 | 0.42 |
|  | Foamed | DNP | 11 | 0.53 |
| III | Solid | 1.0 (1.7 x $10^2$) | 40 | 0.93 |
|  | Foamed | 1.6 (2.8 x $10^2$) | 43 | 0.61 |

(a) DNP = Did Not Peel

The room temperature (70°F/21°C) coefficient of friction testing was conducted by moving the film adhesive layer across a metal surface and measuring the resistance to this movement by a Kayeness combi tester, to simulate film to metal contacts encountered in the production of a film. The results of this testing as reported in Table 1 above suggest that generally the composite film structures of the present invention should show a lesser tendency to tack to process and film rolls, and should be more easily made and handled by conventional film making apparatus.

Film-to-film blocking was tested after aging the films at 100°F (38°C) for 24 hours under 0.25 psig (1.72 x $10^3$ Pa). The force to pull the adhesive layer of one piece of film from the elastomer layer of a second piece of the film was measured using a Kayeness blocking tester. The force reported represents the grams of force required to separate 4 inch by 4 inch (0.09 m by 0.09 m) sheets of a film sample. The composite film structures of the present invention generally show reduced blocking compared to their counterparts with a solid adhesive layer.

The coefficient of friction and tendency to block off a particular composite film structure depend again on the size and shape of the foam cells and the roughness of the foam layer, which characteristics in turn are dependent on a number of factors such as the amount of blowing agent used, whether a cast or blown film process is used for making the film, the extrusion temperature, film line speed, and process die gap. Ideally, however, smaller, rounder and very open and rough foam cells are desired.

The measure of the adhesion of a film to the unbacked woven polyester fabric was conducted in a standard 180 degree peel test, utilizing an Instron™ tensile tester and peeling a one-inch wide strip from the fabric at a rate of 12 inches per minutes (0.005 m/s). Adhesion of the film to a fabric for the composite film structures of the present invention is seen to be at least generally equal or greater to that for a film having a solid adhesive layer.

Example 3

This example illustrates the improvement in moisture vapor transmissibility resulting from an open cell foamed construction of the adhesive layer in a two-layer composite film structure of the present invention, as opposed to the use of a conventional solid adhesive film in combination with a solid thermoplastic layer.

The two-layer films which were compared for this purpose each had a substantially solid 2 mil (5.08 x $10^{-5}$ m)-thick thermoplastic layer which was coextruded with a foamed adhesive layer (1 mil (2.54 x $10^{-5}$) nominal thickness in an unfoamed state) or a 1 mil (2.54 x $10^{-5}$ m)-thick unfoamed adhesive layer. Films were made by both cast (System IV) and blown film processes (Systems II and III), and the water vapor transmission properties for each set or system of foamed and unfoamed films were measured on a Mocon Permatran W600™ permeability tester according to ASTM F 1249-89.

System II and III were as described in Comparative Example I above. System IV employed for a thermoplastic layer a blend of 75 percent by weight of Pellethane™ 2103-90AEF aromatic ether polyurethane (90A durometer, The Dow Chemical Company) and 25 percent by weight of Bynel™ CXA 3101 maleic anhdyride-modified ethylene-vinyl acetate adhesive (3.5 melt index, E.I. DuPont de Nemours & Co., Inc.). The adhesive layer used Plexar™ 3342 maleic anhdyride-modified ethylene-vinyl acetate adhesive (2.0 melt index, Quantum Chemical). The blowing agent was Quantum Spectratech™ FM 1764 sodium bicarbonate/citric acid-based concentrate (Quantum Chemical), and was used at 5 phr in the foamed adhesive layer to give an average foamed net cell area of about 0.42 mm$^2$ (MD of 0.98 mm, TD of 0.6 mm).

The measured water vapor transmission rates for each of these systems are reported in Table 2 below.

These measurements show generally that the open cell foamed construction of the adhesive layer/portion in the inventive composite film structures enables a significant increase in water vapor transmission, compared to a structure employing a convention solid adhesive film construction.

Table 2

| System | Adhesive layer | Water Vapor Transmission Rate (grams $m^2 \bullet$ day) |
|---|---|---|
| II | Solid<br>Foamed | 307<br>765 |
| III | Solid<br>Foamed | 78<br>675 |
| IV | Solid<br>Foamed | 117<br>320 |

Example 4

Two-layer composite film structures were produced by a cast film coextrusion of the thermoplastic copolyester-ether elastomer used in System II of previous Comparative Examples 1 and 2 (DuPont Hytrel™ 4056 copolyester-ether elastomer) with the ethylene-vinyl acetate-based terpolymer adhesive used for the adhesive layer in System III (Plexar™ 3342 maleic anhydride-modified ethylene-vinyl acetate adhesive). In one structure the elastomer layer was 2 mils (5.08 x $10^{-5}$ m) thick with a 1 mil (2.54 x $10^{-5}$ m)-thick solid adhesive layer, while in the second structure 2 phr by weight of a sodium bicarbonate, citric acid-based chemical blowing agent (Hydrocerol™ CF20 (Henley Chemicals), about 10 percent each of sodium bicarbonate and citric acid in polyethylene) was added to the 1 mil (2.54 x $10^{-5}$ m)-thick solid adhesive layer to produce an open cell foamed adhesive layer. The foamed adhesive layer had average net cell dimensions of 5.5 mm in the machine direction and 0.6 mm in the transverse direction, so that the average net cell area of the foamed adhesive layer was about 2.6 $mm^2$.

The water vapor transmission characteristics of these films were measured on the Mocon Permatran W600™ tester as in Example 3.

To demonstrate the extent to which a difference in the transmissibility of foamed and unfoamed films translates to laminates of fabrics with such foamed or unfoamed films, laminates were prepared from the two-layer composite film structures of this Example with two grades of fabric used in commercial automobile seat manufacture. The laminates were prepared by hot roll lamination of the films to a fabric at 400°F (204°C) and a measured interfacial temperature between the adhesive layer of a film and the fabric of about 300°F (149°C).

The water vapor transmission characteristics of the laminates prepared in this fashion were measured with a dish weight loss method described in ASTM E-96-80, along with the water vapor transmission properties of the starting film structures. The film structures or laminates to be tested were sealed onto a dish containing water and periodic weight measurements taken of the dishes to determine the amount of water lost by evaporation through the films or laminates. the water dish tests was conducted in still air at 72°F (22°C) and 50 percent relative humidity.

The results of the tests on the permeability tester and of the water dish testing of the films and laminates are reported for comparison in Table 3.

Table 3

| Water Vapor Transmission Rate (g/$m^2 \bullet$ day) | | | |
|---|---|---|---|
| Nature of Adhesive Layer | Film Structure Only (Mocon, Dish) | Laminate-Fabric #1 | Laminate-Fabric 21 |
| Solid<br>Foamed | (154,41)<br>(326,80) | 93<br>140 | 222<br>508 |

The data in Table 3 show that the open cell foamed construction of the adhesive layer/portion in the inventive composite film structures also enables increased water vapor transmission in film/fabric laminates, compared to such laminates including a conventional solid adhesive film layer.

The data also show a substantial difference in magnitude between the instrumentally measured water vapor transmission rates of the films and those measured with the water dish method. This difference in magnitude can be explained by the use in the permeability tester of a stream of air to more effectively evaporate water through a sample film. The same relative difference in water vapor transmission rates between the film structures having solid and foamed adhesive layers is manifested in both methods, however.

It will be noted that each of the laminates exhibited a higher water vapor transmission rate than did the corresponding starting composite film structure alone. The higher water vapor transmission rate of the laminate of a given film is believed to be at least partially attributable to the formation of pinholes in the solid thermoplastic layer/portion during the lamination of the film to the unbacked fabric, and in fact some pinholes were observed in the laminate with fabric #2, which was the coarser and more elongatable of the two fabrics tested.

It is also expected that the higher rate can be attributed in part to the melting out of the adhesive material onto adjacent fibers of the fabrics, thus in effect thinning and further opening up the normally permeation-resistant adhesive layer.

The Examples collectively show that composite film structures can be made in accordance with the present invention which provide an acceptable barrier to liquids such as a polyurethane foam-forming composition in a foam-in-place process of making, for example, automobile seats, but which are capable of transmitting gases such as water vapor.

Further, such composite film structures can be made with substantially equal or greater adhesion to a fabric used in the manufacture of auto seats compared to a structure using a conventional solid adhesive film, while at the same time exhibiting lessened process and film roll tack and substantially equal or lessened blocking to themselves compared to a solid adhesive film.

The composite film structures can also, as noted in Example 1, exhibit the flexibility, hand and stretchability required for conforming to the interior of a mold in the manufacture of car seats or other automobile parts by a foam-in-place process.

While a number of embodiments and uses are described and exemplified herein, it will be understood that modifications and extensions of such embodiments and uses are possible which are within the spirit and scope of the present invention, and which are therefore intended to be encompassed within the following claims.

## Claims

1. A composite film structure which comprises:

   an open cell foamed adhesive portion; and

   a substantially solid thermoplastic film portion in face-to-face relationship with the foamed adhesive portion.

2. A composite film structure as defined in Claim 1, further comprising a peelable release layer in face-to-face relationship with the open cell foamed adhesive portion opposite the substantially solid thermoplastic film portion.

3. A composite film structure as defined in Claim 1, further comprising a peelable release layer in face-to-face relationship with the substantially solid thermoplastic film portion opposite the open cell foamed adhesive portion.

4. A composite film structure as defined in Claim 1, wherein the open cell foamed adhesive portion consists essentially of a single open cell foamed adhesive layer.

5. A composite film structure as defined in Claim 4, wherein the open cell foamed adhesive layer is comprised of an adhesive material selected from the group consisting of the ethylene copolymer and terpolymer adhesives, copolyester-ether elastomers, thermoplastic polyurethanes, polyesters, polyamides, olefinic adhesive polymers, styrenic block polymers, and mixtures of one or more of such materials.

**6.** A composite film structure as defined in Claim 1, wherein the substantially solid thermoplastic film portion consists essentially of one or more substantially solid thermoplastic film layers in face-to-face relationship.

**7.** A composite film structure as defined in Claim 6, wherein each of the one or more layers is comprised of an elastomeric material selected from the group consisting of the thermoplastic polyurethanes, copolyester-ether elastomers, copolyamide-ether elastomers, styrenic block elastomers, and mixtures of one or more of the same.

**8.** A composite film structure as defined in Claim 6, wherein at least the thermoplastic film layer nearest the open cell foamed adhesive portion further comprises an adhesive materials fraction.

**9.** A composite film structure as defined in Claim 6, wherein the thermoplastic film layer farthest from the open cell foamed adhesive portion further comprises an adhesive materials fraction.

**10.** A composite film structure as defined in Claim 2 or 3, wherein the peelable release layer is comprised of a polyolefin or mixture of polyolefins.

**11.** A composite film structure as defined in Claim 4, wherein the open cell foamed adhesive layer comprises no more than about 50 percent of the thickness of the composite film structure.

**12.** A composite film structure as defined in Claim 11, wherein the open cell foamed adhesive layer possesses an average foam net cell area of from 0.10 to 17 square millimeters.

**13.** A laminate of a composite film structure as defined in Claim 1 and a fabric which has been hot roll laminated, flame bonded or otherwise joined to the open cell foamed adhesive portion opposite the substantially solid thermoplastic portion.

**14.** A laminate as defined in Claim 13, wherein the laminate is readily conformable to a mold cavity for a foam-in-place polyurethane automobile part.

**15.** A foam-in-place automobile part comprising the laminate of Claim 14.

**16.** A method of reducing process and film roll tack in the coextrusion of a film comprised of a layer of a tacky material and a layer of a non-tacky material in face-to-face relationship, which method comprises the step of incorporating a blowing agent in the tacky material prior to coextrusion of the film.

**17.** A method as defined in Claim 16, wherein the film is produced by a cast film process.

**18.** A method as defined in Claim 16, wherein the film is produced by a blown film process and wherein the layer of tacky material is the inner layer in the process.

**19.** A method of fabricating a foamed article by a reaction-in-place foaming process, comprising the steps of:

placing a mold cavity:

an outermost facing layer;

an open cell foamed adhesive layer; and

a thermoplastic elastomer layer bonded to the open cell foamed adhesive layer opposite the outermost facing layer, and presenting an inwardly-facing surface for bonding to a foam core formed during the reaction-in-place foaming process; and

introducing the materials comprising the foam core of the article into the mold cavity; and

subjecting the mold cavity and included materials to conditions sufficient to carry out the reaction-in-place foaming process and to bond the inwardly-facing surface of the thermoplastic elastomer layer to the foam core.

**20.** A method as defined in Claim 19, wherein the outermost facing layer and open cell foamed adhesive layer are bonded together by heat generated from the reaction-in-place foaming process for forming the foam core of the article.

**21.** A method as defined in Claim 19 , wherein:

the facing layer and open cell foamed adhesive layer are adhered to one another in a unitary composite film structure comprising the facing layer, adhesive layer, and the thermoplastic elastomer layer before the reaction-in-place foaming process; and

wherein the step of placing the outermost facing layer, open cell foamed adhesive layer, and thermoplastic elastomer layer in the mold cavity comprises placing the unitary composite film structure in the mold cavity.

**22.** An article made by the method of Claims 19, 20 or 21.

**23.** A method of increasing the permeability of an adhesive film with respect to a gas without increasing the permeability of the film with respect to a liquid, comprising the step of coextruding adhesive material including a blowing agent for forming an open cell foamed adhesive layer with material for forming a substantially solid thermoplastic film layer, under conditions sufficient to cause the adhesive material to foam.

Fig. 1

Fig. 2

Fig. 3

Fig. 4

Fig. 5